# EUROPEAN PATENT APPLICATION

(11) **EP 4 322 582 A1**
(43) Date of publication of application: **14.02.2024**
(21) Application number: 23190300.6
(22) Date of filing: 08.08.2023
(51) Int. Cl.: H04W 12/121

(54) **SECURITY MANAGEMENT WITH COMPROMISED-EQUIPMENT DETECTION IN A COMMUNICATION SYSTEM**

(30) Priority: 11.08.2022 US 202263397193 P
(71) Applicant: Nokia Technologies Oy, 02610 Espoo (FI)
(72) Inventor: P NAIR, Suresh, Estero (US); PRAVINCHANDRA BHATT, Rakshesh, Bangalore (IN); MAVUREDDI DHANASEKARAN, Ranganathan, Munich (DE)
(74) Representative: Nokia EPO representatives

(57) **Abstract**

Techniques for security management with compromised-equipment detection in a communication system are disclosed. For example, a method comprises causing intentional introduction of one or more errors in at least one communication protocol layer of a communication network, wherein the communication network has a plurality of user equipment connected thereto via at least one access point. The method further comprises causing verification of one or more received error indicators against one or more expected error indicators to decide whether any of: (i) the plurality of user equipment; (ii) the at least one access point; or (iii) one or more network entities, may be compromised. In other examples, verifications may be correlated with other logs including, for example, security event logs.

## Description

### Field

The field relates generally to communication systems, and more particularly, but not exclusively, to security management in such communication systems.

### Background

This section introduces aspects that may be helpful in facilitating a better understanding of the inventions. Accordingly, the statements of this section are to be read in this light and are not to be understood as admissions about what is in the prior art or what is not in the prior art.

Fourth generation (4G) wireless mobile telecommunications technology, also known as Long Term Evolution (LTE) technology, was designed to provide high capacity mobile multimedia with high data rates particularly for human interaction. Next generation or fifth generation (5G) technology is intended to be used not only for human interaction, but also for machine type communications in so-called Internet of Things (IoT) networks.

While 5G networks are intended to enable massive IoT services (e.g., very large numbers of limited capacity devices) and mission-critical IoT services (e.g., requiring high reliability), improvements over legacy mobile communication services are supported in the form of enhanced mobile broadband (eMBB) services providing improved wireless Internet access for mobile devices.

In an example communication system, user equipment (5G UE in a 5G network or, more broadly, a UE) such as a mobile terminal (subscriber) communicates over an interface with a base station or access point (e.g., gNB) of an access network. For example, in a 5G network, an access network referred to as a 5G AN is described in 5G Technical Specification (TS) 23.501, entitled "Technical Specification Group Services and System Aspects; System Architecture for the 5G System," and TS 23.502, entitled "Technical Specification Group Services and System Aspects; Procedures for the 5G System (5GS)," the disclosures of which are incorporated by reference herein in their entireties. In general, the access point (e.g., gNB) provides access for the UE to a core network (CN or 5GC), which then provides access for the UE to other UEs and/or a data network such as a packet data network (e.g., Internet). TS 23.501 goes on to define a 5G Service-Based Architecture (SBA) which models services as network functions (NFs) that communicate with each other using representational state transfer application programming interfaces (Restful APIs). Furthermore, 5G Technical Specification (TS) 33.501, entitled "Technical Specification Group Services and System Aspects; Security Architecture and Procedures for the 5G System," the disclosure of which is incorporated by reference herein in its entirety, further describes security management details associated with a 5G network.

Security management is an important consideration in any communication system. However, due to continuing attempts to improve the architectures and protocols associated with a 5G network in order to increase network efficiency and/or subscriber convenience, security management issues can present a significant challenge, especially when attempting to detect compromised UE and/or access point equipment trying to maliciously exploit network functionalities.

### Summary

Illustrative embodiments provide techniques for security management with compromised-equipment detection in a communication system.

For example, in one illustrative embodiment from a perspective of a communication network, a method comprises causing intentional introduction of one or more errors in at least one communication protocol layer of a communication network, wherein the communication network has a plurality of user equipment connected thereto via at least one access point. The method further comprises causing verification of one or more received error indicators against one or more expected error indicators to decide whether any of: (i) the plurality of user equipment; (ii) the at least one access point; or (iii) one or more network entities, may be compromised.

By way of a further example, in one illustrative embodiment from a perspective of user equipment, a method comprises receiving, at the user equipment, a message from a communication network with which the user equipment is connected to intentionally report a given number of errors over a given time period. The method further comprises sending, from the user equipment, one or more messages to the communication network intentionally reporting the given number of errors over the given time period.

By way of another example, in one illustrative embodiment from a perspective of an access point equipment, a method comprises receiving an instruction, from a communication network, to intentionally introduce one or more errors in at least one communication protocol layer. The access point sends data associated with the at least one communication protocol layer with the one or more errors inserted therein to a plurality of user equipment connected to the communication network via the access point. The access point then forwards one or more received error indicators to the communication network to enable verification of the one or more received error indicators against one or more expected error indicators to compute a compromise-detection decision.

Still further illustrative embodiments are provided in the form of a non-transitory computer-readable storage medium having embodied therein executable program code that when executed by a processor causes the processor to perform the above steps. Still further illustrative embodiments comprise apparatus with a processor and a memory configured to perform the above steps.

Advantageously, illustrative embodiments provide techniques to detect compromised user equipment, access point equipment, or any network equipment trying to maliciously exploit network functionalities (e.g., one or more artificial intelligence models) without the malicious equipment being aware of the detection techniques.

These and other features and advantages of embodiments described herein will become more apparent from the accompanying drawings and the following detailed description.

### Brief Description of the Drawings

FIG. 1 illustrates a communication network with which one or more illustrative embodiments may be implemented.
FIG. 2 depicts user equipment, access network entities, and core network entities with which one or more illustrative embodiments may be implemented.
FIG. 3A depicts a compromise-detection message protocol with a non-compromised access point in a communication network according to an illustrative embodiment.
FIG. 3B depicts a compromise-detection message protocol with a compromised access point in a communication network according to an illustrative embodiment.
FIG. 4A depicts a compromise-detection message protocol with non-compromised user equipment in a communication network according to an illustrative embodiment.
FIG. 4B depicts a compromise-detection message protocol with compromised user equipment in a communication network according to an illustrative embodiment.
FIG. 5 illustrates a message flow for detecting compromised user equipment according to an illustrative embodiment.
FIG. 6 illustrates a message flow for detecting compromised user equipment according to another illustrative embodiment.

### Detailed Description

Embodiments will be illustrated herein in conjunction with example communication systems and associated techniques for security management in communication systems. It should be understood, however, that the scope of the claims is not limited to particular types of communication systems and/or processes disclosed. Embodiments can be implemented in a wide variety of other types of communication systems, using alternative processes and operations. For example, although illustrated in the context of wireless cellular systems utilizing 3GPP system elements such as a 3GPP next generation system (5G), the disclosed embodiments can be adapted in a straightforward manner to a variety of other types of communication systems.

In accordance with illustrative embodiments implemented in a 5G communication system environment, one or more 3GPP technical specifications (TS) and technical reports (TR) may provide further explanation of network elements/functions and/or operations that may interact with parts of the inventive solutions, e.g., the above-referenced 3GPP TS 23.501 and 3GPP TS 33.501. Other 3GPP TS/TR documents may provide other details that one of ordinary skill in the art will realize. For example, 5G Technical Report (TR) 37.817, entitled "Technical Specification Group Radio Access Network; Evolved Universal Terrestrial Radio Access (E-UTRA) and NR; Study on enhancement for Data Collection for NR and EN-DC," 5G Technical Specification (TS) 28.104, entitled "Technical Specification Group Services and System Aspects; Management and Orchestration; Management Data Analytics (MDA)," and5G Technical Specification (TS) 23.288, entitled "Technical Specification Group Services and System Aspects; Architecture Enhancements for 5G System (5GS) to Support Network Data Analytics Services," the disclosures of which are incorporated by reference herein in their entireties, may be mentioned below or otherwise applicable in the context of some illustrative embodiments. However, while well-suited for 5G-related 3GPP standards, embodiments are not necessarily intended to be limited to any particular standards.

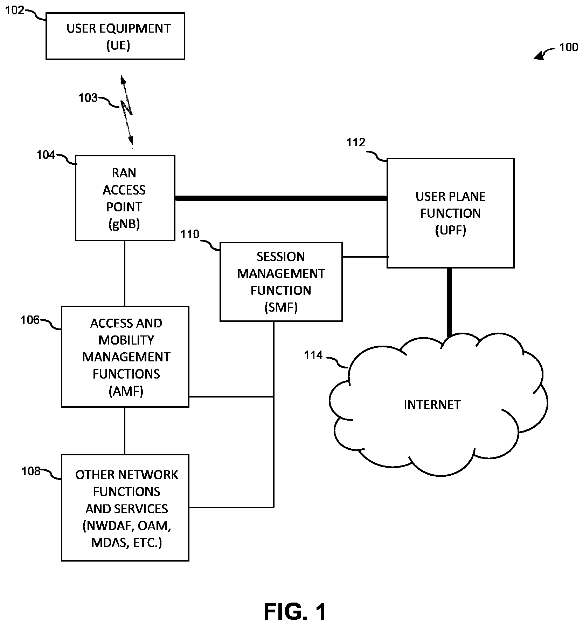

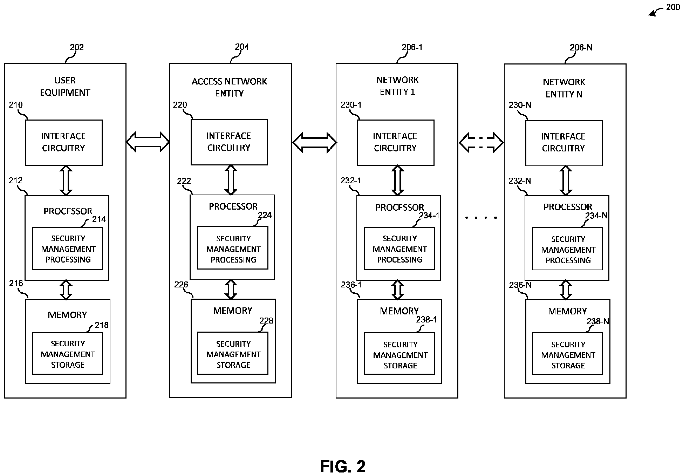

Prior to describing illustrative embodiments, a general description of certain main components of a 5G network will be described below in the context of FIGS. 1 and 2, followed by a description of an existing process for UE onboarding to such a 5G network.

FIG. 1 shows a communication system 100 within which illustrative embodiments are implemented. It is to be understood that the elements shown in communication system 100 are intended to represent main functions provided within the system, e.g., UE access functions, access and mobility management functions, analytics functions, session management functions, user plane functions, etc. As such, the blocks shown in FIG. 1 reference specific elements in 5G networks that provide these main functions. However, other network elements may be used to implement some or all of the main functions represented. Also, it is to be understood that not all functions of a 5G network are depicted in FIG. 1. Rather, at least some functions that facilitate an explanation of illustrative embodiments are represented. Subsequent figures may depict some additional elements/functions (i.e., network entities).

Accordingly, as shown, communication system 100 comprises user equipment (UE) 102 that communicates via an air interface 103 with an access point 104. The access point 104, or gNB in 5G terms, is part of a radio access network (RAN). In some embodiments, there can be more than one gNB associated with the RAN, as well as more than one RAN associated with communication system 100. Any gNBs, and/or parts thereof, can also be referred to herein as base stations, base station routers, base transceiver stations, etc. depending on the RAN configuration. Accordingly, the term access point is generally intended to refer to any one or more parts of RAN equipment that enable UE access to a core communication network.

The UE 102 may be a mobile station, and such a mobile station may comprise, by way of example, a mobile telephone, a computer, or any other type of communication device. The term "user equipment" as used herein is therefore intended to be construed broadly, so as to encompass a variety of different types of mobile stations, subscriber stations or, more generally, communication devices, including examples such as a combination of a data card inserted in a laptop or other equipment such as a smart phone. Such communication devices are also intended to encompass devices commonly referred to as access terminals.

In some illustrative embodiments, UE 102 is comprised of a Universal Integrated Circuit Card (UICC) part and a Mobile Equipment (ME) part. The UICC is the user-dependent part of the UE and contains at least one Universal Subscriber Identity Module (USIM) and appropriate application software. The USIM securely stores a permanent subscription identifier and its related key, which are used to uniquely identify and authenticate subscribers to access networks. The ME is the user-independent part of the UE and contains terminal equipment (TE) functions and various mobile termination (MT) functions. Alternative illustrative embodiments may not use UICC-based authentication, e.g., an Non-Public (Private) Network (NPN).

Note that, in one example, the permanent subscription identifier is an International Mobile Subscriber Identity (IMSI) unique to the UE. In one embodiment, the IMSI is a fixed 15-digit length and consists of a 3-digit Mobile Country Code (MCC), a 3-digit Mobile Network Code (MNC), and a 9-digit Mobile Station Identification Number (MSIN). In a 5G communication system, an IMSI is referred to as a Subscription Permanent Identifier (SUPI). In the case of an IMSI as a SUPI, the MSIN provides the subscriber identity. Thus, only the MSIN portion of the IMSI typically needs to be encrypted. The MNC and MCC portions of the IMSI provide routing information, used by the serving network to route to the correct home network. When the MSIN of a SUPI is encrypted, it is referred to as a Subscription Concealed Identifier (SUCI). Another example of a SUPI uses a Network Access Identifier (NAI). NAI is typically used for IoT communication.

The access point 104 in this illustrative embodiment is operatively coupled to mobility management functions 106. In a 5G network, the mobility management function is implemented by an Access and Mobility Management Function (AMF). A Security Anchor Function (SEAF) can also be implemented with the AMF connecting a UE with the mobility management function. A mobility management function, as used herein, is the element or function (i.e., entity) in the core network (CN) part of the communication system that manages or otherwise participates in, among other network operations, access and mobility operations with the UE (through the access point 104). The AMF may also be referred to herein, more generally, as an access and mobility management entity.

The AMF 106 in this illustrative embodiment is operatively coupled to other network functions and services 108. As shown, other network functions and services 108 may include a Network Data Analytics Function (NWDAF) which is a network function that collects data from 5G core (5GC) network functions, performs network analytics and provides insights with closed loop automation to authorized data consumers. At least a portion of the analytics associated with the NWDAF can be implemented using one or more artificial intelligence (AI) models. Such AI models may comprise machine learning (ML) models, referred to herein as AI/ML, as well as other types of functionalities, algorithms, and applications. Also, depending on the AI model architectures used, communication system 100 can comprise multiple NWDAFs. Other network functions and services 108 can also comprise operations, administration, and maintenance (OAM) functions and services. OAM generally refers to processes and functionalities used in provisioning and managing a communication network or element within a communication network. Still further, other network functions and services 108 can also comprise management data analytics services (MDAS) functions and services. MDAS generally refers to management data analytics to support network management and orchestration.

Note that a UE, such as UE 102, is typically subscribed to what is referred to as a Home Public Land Mobile Network (HPLMN) in which other network functions and services 108 typically reside. The HPLMN is also referred to as the Home Environment (HE). If the UE is roaming (not in the HPLMN), it is typically connected with a Visited Public Land Mobile Network (VPLMN) also referred to as a visited network, while the network that is currently serving the UE is also referred to as a serving network. In the roaming case, other network functions and services 108 can reside in the VPLMN, in which case, functions in the VPLMN communicate with functions in the HPLMN as needed. However, in a non-roaming scenario, network functions typically reside in the same communication network. Embodiments described herein are not limited by which functions reside in which PLMN (i.e., HPLMN or VPLMN).

The access point 104 is also operatively coupled (via one or more of functions 106 and/or 108) to a Session Management Function (SMF) 110, which is operatively coupled to a User Plane Function (UPF) 112. UPF 112 is operatively coupled to a Packet Data Network, e.g., Internet 114. Note that the thicker solid lines in this figure denote a user plane (UP) of the communication network, as compared to the thinner solid lines that denote a control plane (CP) of the communication network. It is to be appreciated that Internet 114 in FIG. 1 may additionally or alternatively represent other network infrastructures including, but not limited to, cloud computing infrastructure and/or edge computing infrastructure. Further typical operations and functions of such network elements are not described here since they are not the focus of the illustrative embodiments and may be found in appropriate 3GPP 5G documentation. Note that functions shown in 106, 108, 110 and 112 are examples of network functions (NFs).

It is to be appreciated that this particular arrangement of system elements is an example only, and other types and arrangements of additional or alternative elements can be used to implement a communication system in other embodiments. For example, in other embodiments, the communication system 100 may comprise other elements/functions not expressly shown herein.

Accordingly, the FIG. 1 arrangement is just one example configuration of a wireless cellular system, and numerous alternative configurations of system elements may be used. For example, although only single elements/functions are shown in the FIG. 1 embodiment, this is for simplicity and clarity of description only. A given alternative embodiment may of course include larger numbers of such system elements, as well as additional or alternative elements of a type commonly associated with conventional system implementations.

It is also to be noted that while FIG. 1 illustrates system elements as singular functional blocks, the various subnetworks that make up the 5G network are partitioned into so-called network slices. Network slices (network partitions) comprise a series of network function (NF) sets (i.e., function chains) for each corresponding service type using network function virtualization (NFV) on a common physical infrastructure. The network slices are instantiated as needed for a given service, e.g., eMBB service, massive IoT service, and mission-critical IoT service. A network slice or function is thus instantiated when an instance of that network slice or function is created. In some embodiments, this involves installing or otherwise running the network slice or function on one or more host devices of the underlying physical infrastructure. UE 102 is configured to access one or more of these services via access point 104.

FIG. 2 is a block diagram illustrating computing architectures for various participants in methodologies according to illustrative embodiments. More particularly, system 200 is shown comprising user equipment (UE) 202 operatively coupled to an access network entity 204, and a plurality of network entities 206-1, ...., 206-N operatively coupled to access network entity 204 as well as to each other. For example, in illustrative embodiments and with reference back to FIG. 1, UE 202 can represent UE 102, access network entity 204 can represent access point 104, and network entities 206-1, ... , 206-N can represent mobility management functions 106, other network functions and services 108, session management function 110, and user plane function 112, as well as other functions in the 5G core network (e.g., functions in the VLPMN and/or the HPLMN). It is to be appreciated that the UE 202, access network entity 204, and network entities 206-1, ...., 206-N are configured to interact to provide security management and other techniques described herein.

User equipment 202 comprises a processor 212 coupled to a memory 216 and interface circuitry 210. The processor 212 of the user equipment 202 includes a security management processing module 214 that may be implemented at least in part in the form of software executed by the processor 212. The processing module 214 performs security management described in conjunction with subsequent figures and otherwise herein. The memory 216 of the user equipment 202 includes a security management storage module 218 that stores data generated or otherwise used during security management operations.

Access network entity 204 comprises a processor 222 coupled to a memory 226 and interface circuitry 220. The processor 222 of access network entity 204 includes a security management processing module 224 that may be implemented at least in part in the form of software executed by the processor 222. The processing module 224 performs security management described in conjunction with subsequent figures and otherwise herein. The memory 226 of access network entity 204 includes a security management storage module 228 that stores data generated or otherwise used during security management operations.

Each of the network entities (individually or collectively referred to herein as 206) comprises a processor 232 (232-1, . . . , 232-N) coupled to a memory 236 (236-1, . . . , 236-N) and interface circuitry 230 (230-1, ... , 230-N). Each processor 232 of each network entity 206 includes a security management processing module 234 (234-1, . . . , 234-N) that may be implemented at least in part in the form of software executed by the processor 232. The processing module 234 performs security management operations described in conjunction with subsequent figures and otherwise herein. Each memory 236 of each network entity 206 includes a security management storage module 238 (238-1, ... , 238-N) that stores data generated or otherwise used during security management operations.

The processors 212, 222, and 232 may comprise, for example, microprocessors such as central processing units (CPUs), application-specific integrated circuits (ASICs), digital signal processors (DSPs) or other types of processing devices, as well as portions or combinations of such elements.

The memories 216, 226, and 236 may be used to store one or more software programs that are executed by the respective processors 212, 222, and 232 to implement at least a portion of the functionality described herein. For example, security management operations and other functionality as described in conjunction with subsequent figures and otherwise herein may be implemented in a straightforward manner using software code executed by processors 212, 222, and 232.

A given one of the memories 216, 226, and 236 may therefore be viewed as an example of what is more generally referred to herein as a computer program product or still more generally as a processor-readable storage medium that has executable program code embodied therein. Other examples of processor-readable storage media may include disks or other types of magnetic or optical media, in any combination. Illustrative embodiments can include articles of manufacture comprising such computer program products or other processor-readable storage media.

Further, the memories 216, 226, and 236 may more particularly comprise, for example, electronic random-access memory (RAM) such as static RAM (SRAM), dynamic RAM (DRAM) or other types of volatile or non-volatile electronic memory. The latter may include, for example, non-volatile memories such as flash memory, magnetic RAM (MRAM), phasechange RAM (PC-RAM) or ferroelectric RAM (FRAM). The term "memory" as used herein is intended to be broadly construed, and may additionally or alternatively encompass, for example, a read-only memory (ROM), a disk-based memory, or other type of storage device, as well as portions or combinations of such devices.

The interface circuitries 210, 220, and 230 illustratively comprise transceivers or other communication hardware or firmware that allows the associated system elements to communicate with one another in the manner described herein.

It is apparent from FIG. 2 that user equipment 202, access network entity 204, and the plurality of network entities 206 are configured for communication with each other, or subsets thereof, as security management participants via their respective interface circuitries 210, 220, and 230. This communication involves each participant sending data to and/or receiving data from one or more of the other participants. The term "data" as used herein is intended to be construed broadly, so as to encompass any type of information that may be sent between participants including, but not limited to, identity data, keys, key indicators, security management messages, request/response messages and data, request/response messages, authentication request/response messages and data, metadata, control data, audio, video, multimedia, other information, messages and/or parameters, etc.

It is to be appreciated that the particular arrangement of components shown in FIG. 2 is an example only, and numerous alternative configurations may be used in other embodiments. For example, any given network element/function can be configured to incorporate additional or alternative components and to support other communication protocols.

Other system elements may each be configured to include components such as a processor, memory and network interface. These elements need not be implemented on separate stand-alone processing platforms, but could instead, for example, represent different functional portions of a single common processing platform.

More generally, FIG. 2 can be considered to represent processing devices configured to provide respective security management functionalities and operatively coupled to one another in a communication system.

As mentioned above, the 3GPP TS 23.501 defines the 5G system architecture as service-based, e.g., Service-Based Architecture (SBA). It is realized herein that in deploying different NFs, there can be many situations where an NF may need to interact with an entity external to the SBA-based 5G core network (e.g., including the corresponding PLMN(s), e.g., HPLMN and VPLMN). Thus, the term "internal" as used herein illustratively refers to operations and/or communications within the SBA-based 5G core network (e.g., SBA-based interfaces) and the term "external" illustratively refers to operations and/or communications outside the SBA-based 5G core network (non-SBA interfaces).

Given the above general description of some features of a 5G network, problems with existing security approaches and solutions proposed in accordance with illustrative embodiments will now be described herein below.

Various AI/ML-based use cases and requirements described in 3GPP standards rely on inputs received from UEs and other network elements such as base stations and network management systems. Security management in such use cases are a concern in conventional communication systems. Examples of such use cases include, but are not limited to, the following RAN use-cases:
(i) Network energy savings use case. Energy savings is an important use case which may involve different layers of the network, with mechanisms operating at different time scales. Cell activation/deactivation is an energy saving scheme in the spatial domain that exploits traffic offloading in a layered structure to reduce the energy consumption of the whole radio access network (RAN). When the expected traffic volume is lower than a threshold, the cells may be switched off, and the served UEs may be offloaded to a new target cell. AI/ML can be used to automatically predict the lower traffic volumes and enhance the energy saving for RAN network elements.
(ii) Load balancing use case. A goal of load balancing is to distribute load evenly among cells and among areas of cells, or to transfer part of the traffic from congested cells or from congested areas of cells, or to offload users from one cell, cell area, carrier, or radio access technology (RAT) to improve network performance. The automation of such optimization can provide high quality user experience, while simultaneously improving the system capacity and to minimize human intervention in the network management and optimization tasks. AI/ML can be used to automatically predict congestion and proactively take mitigation steps in order to ensure minimal impacts on end-user's quality of experience (QoE).
(iii) Mobility optimization use case. A goal of mobility optimization is to guarantee the service-continuity during UE mobility by minimizing call drops, radio link failures (RLFs), unnecessary handovers, and ping-pong. For the applications characterized with the stringent quality of service (QoS) requirements such as reliability, latency etc., QoE is sensitive to handover performance, so that mobility management should avoid unsuccessful handovers and reduce the latency during handover procedures. However, for the conventional method, it is challenging for a trial-and-error-based scheme to achieve nearly zero-failure handover. AI/ML-based solutions can predict the need to optimize radio parameters and apply proactive configuration changes in order to ensure zero-failure handovers.

Note that the above and other use cases, e.g., described in the above-mentioned 3GPP TS 28.104 and 3GPP TS 23.288, rely on training AI/ML models with various inputs from UEs.

With more and more wireless network automations relying on AI/M-based solutions, it becomes very important to ensure the security of AI/ML models and applications. 5G standards elaborate the usage of AI/ML for various network optimization use cases. For example, services provided by MDAS are described in 3GPP TS 28.104 and assist various automated network optimizations related to 5G radio access network (5G RAN). Functionalities provided by NWDAF are described in the above-referenced 3GPP TS 23.288 and assist various automated network optimizations controlled by the 5G core network (5GC).

It is realized that if any of the AI/ML-based solutions developed for MDAS, NWDAF, or the like, become compromised, these automated network optimizations can have significant negative impacts on system behaviour and performance.

For example, if a UE is compromised (e.g., a compromised version of UE 102), it can launch data poisoning-type attacks towards the AI/ML models intended to perform automated network optimizations. Similarly, a fake BTS (e.g., a compromised version of access point 104) can also manipulate AI/ML inputs sent from UEs or generated by BTS, and consumed by analytics functions in the same or other BTSs or entities such as MDAS or NWDAF. Any network function, once compromised, can lead to negative influences on AI/ML models used for RAN optimizations. It is also realized that it is important to detect such compromised network functions/elements in a manner that the compromised entity is not aware. Conventional communication systems and protocols do not have such transparent detection functionalities.

In the use case scenarios mentioned above, there is an assumption of trust by the BTS/network that the UE communicating with BTS is genuine and the data reported by the UE is valid. It is possible therefore for the UE to report incorrect data to intentionally drive the BTS AI/ML training models to wrong conclusions about network performance and initiate incorrect actions. It is realized herein that communication systems should protect themselves against such intentional manipulations by wrong performance data injections. For example, a hacker may create a UE with a software-defined radio and may mimic multiple connection requests to the BTS, to trigger the BTS to think that multiple UEs are trying to connect to the BTS. In such a scenario, the BTS may not be able to enter a power saving mode (use case (i) described above). Similar attack scenarios also exist for use cases (ii) and (iii) described above.

Illustrative embodiments address the above and other issues by providing techniques for intentionally introducing data errors (e.g., erroneous packets) and using one or more counters to cross-verify and detect a compromised BTS or UE. Furthermore, illustrative embodiments can be implemented for detecting any compromised service or network function.

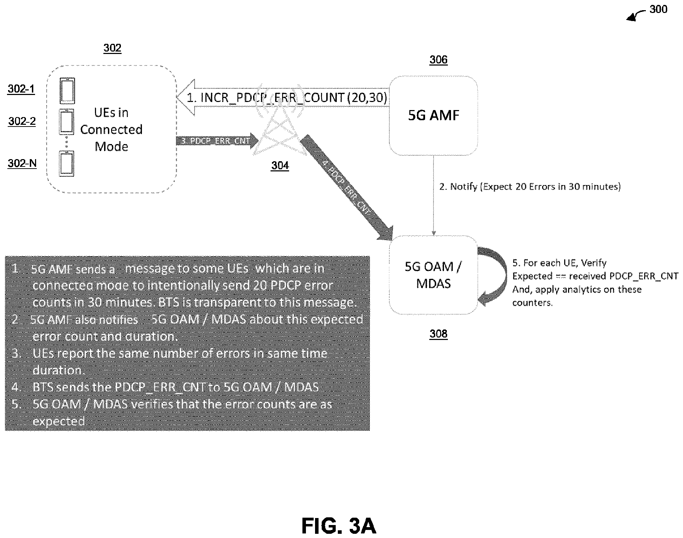

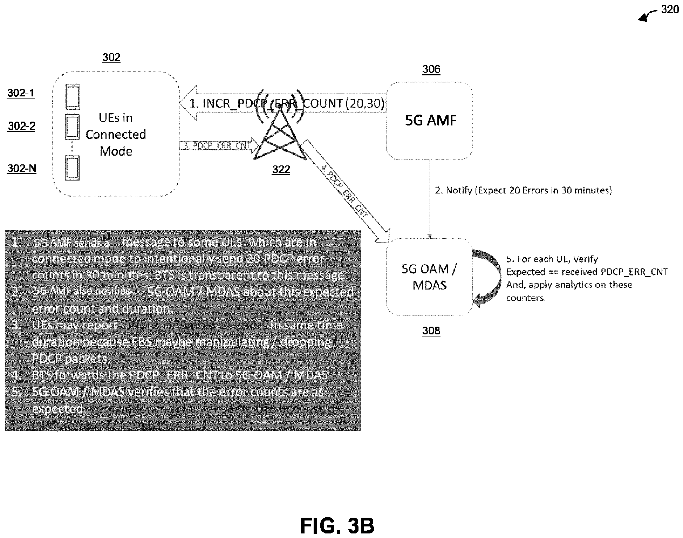

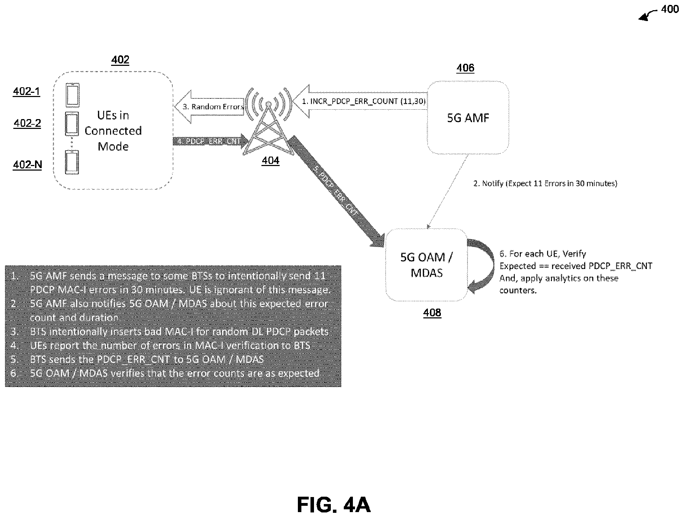

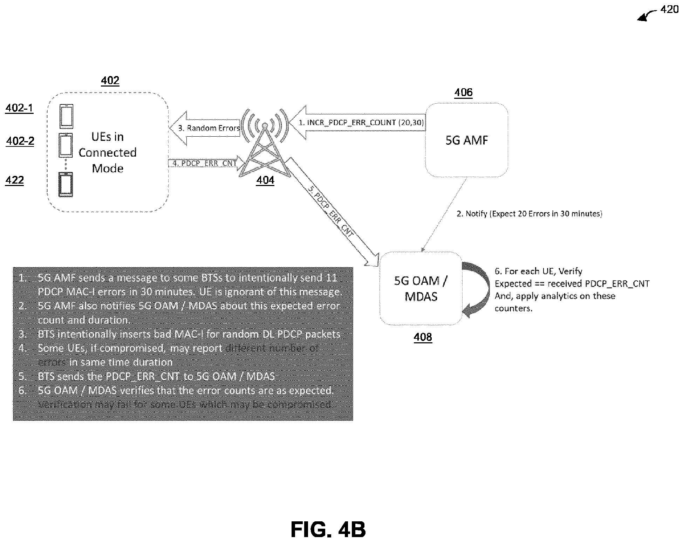

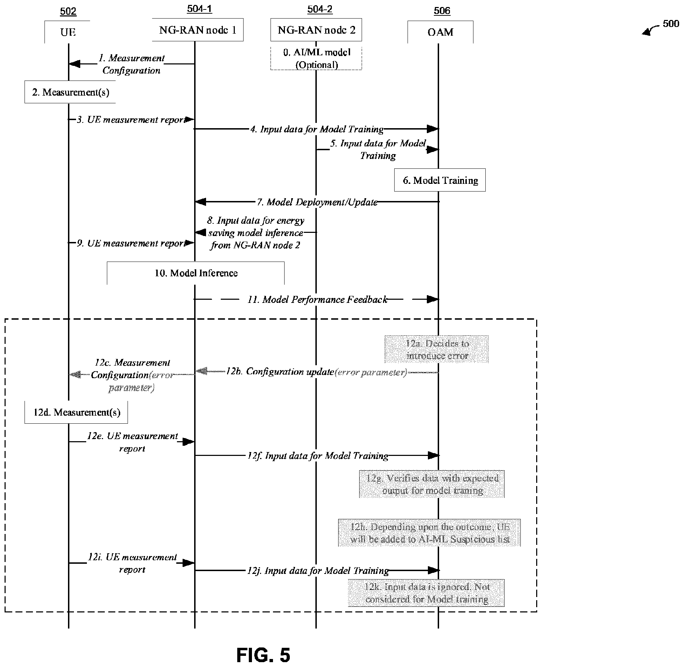

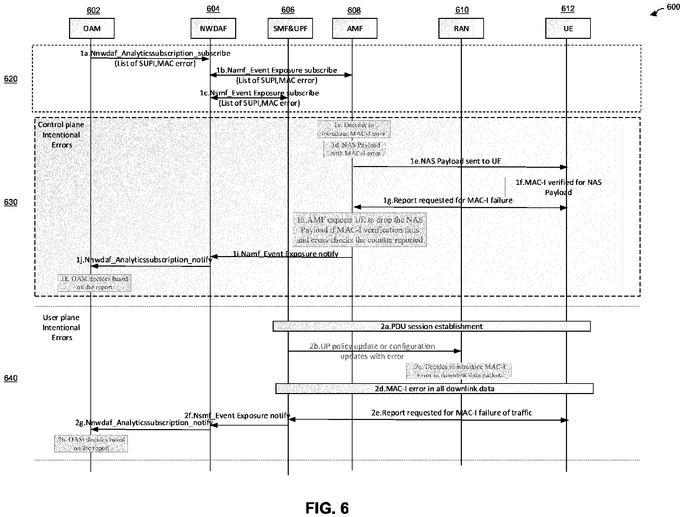

It is to be appreciated that illustrative embodiments described below in the context of FIGS. 3A and 3B and FIGS. 4A and 4B utilize intentional MAC-I (Message Authentication Code for Integrity) verification failures. MAC-I is a field added by the Packet Data Convergence Protocol (PDCP) layer to each Radio Resource Control (RRC) message for the purpose of integrity protection. However, alternative embodiments can insert intentional errors at other protocol layers as well, additional examples of which will be described below in the context of FIGS. 5 and 6.

Referring now to FIGS. 3A and 3B, according to an illustrative embodiment, FIG. 3A depicts a compromise-detection message protocol 300 with a non-compromised access point, while FIG. 3B depicts compromise-detection message protocol 320 with a compromised access point.

More particularly, in this illustrative embodiment, the access point is referred to as the BTS, and a non-access stratum (NAS) NAS level message is used to detect a fake BTS intending to manipulate a UE's AI/ML functionality, or manipulate inputs to AI/ML functionalities implemented in the same or other BTSs or analytics entities such as MDAS or NWDAF.

Accordingly, only the SGC and the UE knows that intentionally, in the next "N" minutes, the UE will report "X" number of errors (randomly).

The AMF sends a new NAS message to the UE, asking the UE to increment a count of the number of invalid MAC-Is in the PDCP layer.

A new counter (NUM_PDCP_MACI_ VERIFICATION FAILURES) is provided in an illustrative embodiment (e.g., periodically reported along with Performance Management (PM) counters) for the number of invalid MAC-Is in the PDCP layer. For example, PM counters can be collected by the BTS or the OAM every 15 minutes. AMF sends ADD_PDCP_ERROR_COUNTS (NAS encrypted and integrity protected) with, for example, 20 errors in 30 minutes. The BTS cannot read these parameters and hence, does not know how many errors in how much duration will be traversing from a UE to the 5GC. Accordingly, in the subsequent two collections of 15-minute intervals each, the UE should report a total of 20 errors. The UE randomly drops 20 PDCP packets, such that the total count of errors is 20 in 30 minutes, even if the MAC-I verification succeeds, and increments NUM_PDCP_MACI_VERIFICATION_FAILURES. Assume the OAM receives these counts for 30 minutes, and, for example, out of 100 UEs, 99 reported correctly, but one reported a wrong count. This can be due to a suspicious BTS to which that UE is connected. The confidence level of such suspicions can be enhanced by applying analytics on such counters and correlating with other logs (including security event logs) collected from the BTS.

In an alternative embodiment, the UE can intentionally send a bad MAC-I in 20 PDCP packets, and the BTS should report this number to OAM.

In one or more illustrative embodiments, the new counter is introduced for, e.g., a number of integrity protection failures at the PDCP layer.

Note that the BTS is ignorant of this error reporting communication because it is using an NAS security context.

The above-described compromise-detection functionalities are shown in further illustrative detail in FIGS. 3A and 3B. As shown, assume a plurality of UEs 302 (302-1, 302-2,..., 302-N) are operatively coupled to a SGC in a connected mode via a BTS 304. The SGC comprises 5G AMF 306 and 5G OAM/MDAS 308.

Compromise-detection message protocol 300 of FIG. 3A (non-compromised BTS) comprises the following steps:
Step 1. 5G AMF 306 sends a message to the plurality of UEs 302 which are in connected mode to intentionally send 20 PDCP error counts in 30 minutes. Non-compromised BTS 304 is transparent to this message.
Step 2. 5G AMF 306 also notifies 5G OAM/MDAS 308 about this expected error count and duration.
Step 3. The plurality of UEs 302 report the same number of errors in the same time duration.
Step 4. Non-compromised BTS 304 sends the PCP_ERR_CNT to 5G OAM/MDAS 308.
Step 5. 5G OAM/MDAS 308 verifies the error counts are as expected.

Refer now to compromise-detection message protocol 320 of FIG. 3B (compromised BTS or, more generally, compromised access point equipment) with the same components described above in FIG. 3A with the exception of a compromised BTS 322 in place of non-compromised BTS 304. Compromise-detection message protocol 320 comprises the following steps:
Step 1. 5G AMF 306 sends a message to the plurality of UEs 302 which are in connected mode to intentionally send 20 PDCP error counts in 30 minutes. Compromised BTS 322 is transparent to this message.
Step 2. 5G AMF 306 also notifies 5G OAM/MDAS 308 about this expected error count and duration.
Step 3. At least some of the plurality of UEs 302 may report a different number of errors in the same time duration because compromised BTS 322 (fake BTS or FBS) may be manipulating/dropping PDCP packets.
Step 4. BTS 304 sends the PCP_ERR_CNT to 5G OAM/MDAS 308.
Step 5. 5G OAM/MDAS 308 attempts to verify the error counts are as expected. Verification may fail for some of the plurality of UEs 302 because of compromised BTS 322. One or more remedial actions are then taken to eliminate BTS 322 from operating as an access point and thus prevent compromised BTS 322 from having a negative impact on AI/ML functionalities.

Referring now to FIGS. 4A and 4B, according to an illustrative embodiment, FIG. 4A depicts a compromise-detection message protocol 400 with non-compromised UEs, while FIG. 4B depicts compromise-detection message protocol 420 with at least one compromised UE.

More particularly, in this illustrative embodiment, the SGC configures the BTS to intentionally send "X" number of erroneous packets in the next "N" minutes. The UEs are unaware of this configuration set up in the 5GC. The AMF sends a new message to the BTS, indicating that it should introduce "X" number of erroneous packets in the next "N" minutes. When the BTS receives this message, it randomly introduces errors in packets. For example, in downlink (DL) PDCP packets towards the UE, the BTS alters the MAC-I intentionally, so that the UE would fail to verify the integrity. The UE increments NUM_PDCP_MACI_ VERIFICATION_FAILURES for every such failure. When the UE reports this counter value to the BTS, it can be cross-checked with the expected number of MAC-I failures. Note that the BTS will insert such errors for multiple UEs which are in the connected mode. The BTS sends such intentional erroneous packets and counts the response from UE to match this. If the count matches, the UE is not compromised; otherwise, analytics can be performed using such counters correlated with other logs (including security event logs) to decide whether the UE with the incorrect count is compromised or not.

The above-described compromise-detection functionalities are shown in further illustrative detail in FIGS. 4A and 4B. As shown, assume a plurality of UEs 402 (402-1, 402-2,..., 402-N) are operatively coupled to a SGC in a connected mode via a BTS 404. The SGC comprises 5G AMF 406 and 5G OAM/MDAS 408.

Compromise-detection message protocol 400 of FIG. 4A (non-compromised UEs) comprises the following steps:
Step 1. 5G AMF 406 sends a message to one or more BTSs including BTS 404 to intentionally send 11 PDCP MAC-I errors in 30 minutes. UEs 402 are unaware of this message.
Step 2. 5G AMF 406 also notifies 5G OAM/MDAS 408 about this expected error count and duration.
Step 3. BTS 404 intentionally inserts bad MAC-I for random DL PDCP packets.
Step 4. UEs report the number of errors in MAC-I verification to BTS 404.
Step 5. BTS 404 sends the PDCP_ERR_CNT to 5G OAM/MDAS 408.
Step 6. 5G OAM/MDAS 408 verifies the error counts are as expected.

Refer now to compromise-detection message protocol 420 of FIG. 4B (at least one compromised UE) with the same components described above in FIG. 4A with the exception of a compromised UE 422 in place of non-compromised UE 402-N. Compromise-detection message protocol 420 comprises the following steps:
Step 1. 5G AMF 406 sends a message to one or more BTSs including BTS 404 to intentionally send 11 PDCP MAC-I errors in 30 minutes. The UEs (i.e., 402 and 422) are unaware of this message.
Step 2. 5G AMF 406 also notifies 5G OAM/MDAS 408 about this expected error count and duration.
Step 3. BTS 404 intentionally inserts bad MAC-I for random DL PDCP packets.
Step 4. Some UEs, if compromised (i.e., UE 422) may report a different number of errors in the same time duration.
Step 5. BTS 404 sends the PDCP_ERR_CNT to 5G OAM/MDAS 408.
Step 6. 5G OAM/MDAS 408 attempts to verify the error counts are as expected. Verification may fail for some of the plurality of UEs, i.e., UE 422, because they are compromised. One or more remedial actions are then taken to prevent compromised UE 422 from having a negative impact on AI/ML functionalities.

Illustrative embodiments realize that data sanitization enables determining if a UE is intentionally sending any bad data. Knowingly introducing errors and checking if the UE reports the same number of errors in the same time period is an effective technique to detect any compromised UE. As explained above, similar methods are used to detect compromised BTSs or any NF. While such compromise-detection message protocols are used as explained herein, it is to be appreciated that the number of errors and the rate of errors are selected so as not to impact any genuine UE or network functionality and performance.

FIG. 5 illustrates a message flow 500 for detecting compromised user equipment according to an illustrative embodiment. As shown, message flow 500 involves UE 502, NG-RAN node 504-1 (NG-RAN node 1 or gNB1, BTS1, etc.), NG-RAN node 504-2 (NG-RAN node 2 or gNB2, BTS2, etc.), and OAM 506.
Step 0. NG-RAN node 504-2 is assumed to have an AI/ML model, which can provide NG-RAN node 504-1 with input information.
Step 1. NG-RAN node 504-1 configures the measurement information on the UE side and sends a configuration message to UE 502 to perform a measurement procedure and reporting.
Step 2. UE 502 collects the indicated measurement(s), e.g., UE measurements related to reference signal received power (RSRP), reference signal received quality (RSRQ), and signal to interference plus noise ratio (SINR) of its serving cell and neighboring cells.
Step 3. UE 502 sends the measurement report message(s) to NG-RAN node 504-1.
Step 4. NG-RAN node 504-1 further sends UE measurement reports together with other input data for model training to OAM 506.
Step 5. NG-RAN node 504-2 (assumed to have an AI/ML model) also sends input data for model training to OAM 506.
Step 6. Model training is performed at OAM 506. Measurements and input data from other NG-RAN nodes may also be leveraged to train AI/ML models for network energy savings.
Step 7. OAM 506 deploys/updates the AI/ML model into the NG-RAN node(s). An NG-RAN node can also continue model training based on the received AI/ML model from OAM 506.
Step 8. NG-RAN node 504-2 sends the input data to NG-RAN node 504-1 for model inference of AI/ML-based network energy savings.
Step 9. UE 502 sends the UE measurement report(s) to NG-RAN node 504-1.
Step 10. Based on local inputs of NG-RAN node 504-1 and received inputs from NG-RAN node 504-2, NG-RAN node 504-1 generates model inference output(s) (e.g., energy savings strategy, handover strategy, etc).
Step 11. NG-RAN node 504-1 sends model performance feedback to OAM 506 if applicable.
Step 12 (sub-steps 12a-12j). OAM 506 decides to introduce the error and sends a configuration update to NG-RAN node 504-1 with intentional error parameters. The configuration update is sent to UE 502 in a measurement configuration message. UE 502 performs the measurement and reports to NG-RAN node 504-1. Those inputs are forwarded as input data to OAM 506 for model training. OAM 506 verifies the received data with expected output if the error is reflected in the data. Based on the verification, OAM 506 maintains a list of UEs which are suspicious and will refrain from using the data from those UEs.

FIG. 6 illustrates a message flow 600 for detecting compromised user equipment according to another illustrative embodiment. As shown, message flow 600 involves an OAM 602, an NWDAF 604, an SMF and a UPF collectively or individually referenced as 606, an AMF 608, a RAN 610 (e.g., one or more gNBs, BTSs, etc.), and a UE 612.

As part of an analytics subscription procedure 620, OAM 602 sends an NWDAF analytics subscription subscribe message with a list of SUPIs and MAC error indication to NWDAF 604. The list presumably includes the SUPI for UE 612. NWDAF 604 further exposes the subscribe event to AMF 608 and SMF 606 with the list of SUPIs and MAC error indication.

In a control plane procedure 630, as the MAC error indication is received, AMF 608 decides to introduce the MAC-I intentional error for all the SUPIs (including for UE 612) sequentially. An NAS payload is sent to UE 612 with MAC-I which is intentionally erroneously calculated.

UE 612 is expected to ignore the NAS payload, and no response should be expected in this scenario.

Subsequently, after a given number of continuous attempts of MAC-I failures, AMF 608 requests UE 612 for a report of failures and AMF 608 cross checks the counter reported. AMF 608 also shares the report to NWDAF 604 for further analytics.

In a user plane procedure 640, as the MAC error indication is received, SMF (part of 606) decides to introduce the MAC-I intentional error for all the SUPIs (including UE 612) sequentially. Downlink traffic is sent to UE 612 with MAC-I which is intentionally erroneously calculated.

UE 612 is expected to ignore the downlink data with wrongly calculated MAC-I and no response should be expected in this scenario.

Subsequently, after a given number of continuous attempts of MAC-I failures, SMF 606 requests UE 612 for a report of failures and SMF 606 cross checks the counters reported. SMF 606 also shares the report to NWDAF 604 for further analytics.

With received reports from NWDAF 604 for both user plane and control plane cases, OAM 602 decides to move some of the UEs to a whitelist or a suspicious list. Any model data from these UEs is not considered for any AI-MI, model training purposes.

It is to be appreciated that illustrative embodiments are not limited to the above standards or message formats referenced in FIGS. 1-6, but are more generally applicable to any communication network implementations wherein detection of compromised devices and/or AI model security management is needed/desired.

The particular processing operations and other system functionality described in conjunction with the diagrams described herein are presented by way of illustrative example only, and should not be construed as limiting the scope of the disclosure in any way. Alternative embodiments can use other types of processing operations and messaging protocols. For example, the ordering of the steps may be varied in other embodiments, or certain steps may be performed at least in part concurrently with one another rather than serially. Also, one or more of the steps may be repeated periodically, or multiple instances of the methods can be performed in parallel with one another.

It should again be emphasized that the various embodiments described herein are presented by way of illustrative example only and should not be construed as limiting the scope of the claims. For example, alternative embodiments can utilize different communication system configurations, user equipment configurations, base station configurations, provisioning and usage processes, messaging protocols and message formats than those described above in the context of the illustrative embodiments. These and numerous other alternative embodiments within the scope of the appended claims will be readily apparent to those skilled in the art.

## Claims

1. An apparatus comprising means for:
receiving a message from a communication network with which the apparatus is connected to intentionally report a given number of errors over a given time period; and
sending one or more return messages to the communication network intentionally reporting the given number of errors over the given time period.

2. The apparatus of claim 1, wherein the received message is a secure message and unreadable to a radio access network that enables the apparatus to connect to the communication network.

3. The apparatus of claim 1, further comprising means for:
in response to receipt of the message from the communication network, incrementing a counter to intentionally indicate the given number of errors.

4. The apparatus of claim 1, wherein a type of error of the errors being intentionally reported by the apparatus comprises a packet data level error.

5. The apparatus of claim 4, wherein the type of error comprises a message authentication code for integrity verification failure.

6. The apparatus of claim 1, wherein at least one of the apparatus and the communication network comprise artificial intelligence functionality.

7. The apparatus of claim 1, wherein the at least one processor, the at least one memory, and the computer program code are part of user equipment.

8. An apparatus comprising means for:
causing intentional introduction of one or more errors in at least one communication protocol layer of a communication network having a plurality of user equipment connected thereto via at least one access point; and
causing verification of one or more received error indicators against one or more expected error indicators to decide whether any of: (i) the plurality of user equipment; (ii) the at least one access point; or (iii) one or more network entities, may be compromised.

9. The apparatus of claim 8, wherein causing intentional introduction of the one or more errors further comprises sending a message to the plurality of user equipment, through the at least one access point, to intentionally report a given number of errors over a given time period.

10. The apparatus of claim 8, wherein causing intentional introduction of the one or more errors further comprises sending a message to the at least one access point to instruct the at least one access point to intentionally introduce a given number of errors over a given time period into data sent to the plurality of user equipment.

11. The apparatus of claim 8, wherein the at least one communication protocol layer in which the one or more errors are intentionally introduced comprises a packet data convergence protocol layer.

12. The apparatus of claim 8, wherein the one or more errors intentionally introduced comprise one or more message authentication code for integrity verification failures.

13. The apparatus of claim 8, wherein the one or more errors intentionally introduced comprise one or more measurement configuration errors.

14. The apparatus of claim 8, wherein at least one of the communication network and one or more of the plurality of user equipment comprise artificial intelligence functionality.

15. An apparatus comprising means for:
receiving an instruction, from a communication network, to intentional introduce one or more errors in at least one communication protocol layer;
sending data associated with the at least one communication protocol layer with the one or more errors inserted therein to a plurality of user equipment connected to the communication network via the apparatus; and
forwarding one or more received error indicators to the communication network to enable verification of the one or more received error indicators against one or more expected error indicators to compute a compromise-detection decision.
